# EUROPEAN PATENT APPLICATION

(11) **EP 3 015 356 A1**
(43) Date of publication of application: **04.05.2016**
(21) Application number: 14842871.7
(22) Date of filing: 04.08.2014
(51) Int. Cl.: B63C 11/00, B08B 9/023, B63B 59/10, B25J 5/00, B25J 15/08

(54) **MAINTENANCE DEVICE**

(30) Priority: 04.09.2013 JP 2013183362
(71) Applicant: Mitsubishi Heavy Industries, Ltd., Tokyo 108-8215 (JP)
(72) Inventor: KAWAUCHI, Naoto, Tokyo 108-8215 (JP); FUKE, Yasutaka, Tokyo 108-8215 (JP); HIROKAWA, Kiyoshi, Tokyo 108-8215 (JP)
(74) Representative: Intès, Didier Gérard André
(86) International application number: PCT/JP2014/070486
(87) International publication number: WO 2015/033722

(57) **Abstract**

A maintenance apparatus (100) maintains a pipe under the sea. The maintenance apparatus (100) includes: a first grip device (10) that has a plurality of joints and includes a first grip portion (11) holding releasably a first portion of the pipe; a second grip device (20) that has a plurality of joints, includes a second grip portion (21) holding releasably a second portion of the pipe, and is movable relative to the first grip device (10); a maintenance device (30) that is mounted on at least one of the first grip device (10) and the second grip device (20) and is used for maintenance of the pipe; and a drive device (40) that drives the first grip device (10) and the second grip device (20) such that the first grip device (10) and at least portion of the second grip device (20) move relative to each other.

## Description

### Field

The present invention relates to a maintenance apparatus that maintains pipes under the sea.

### Background

There is known a floating production, storage and offloading (FPSO) unit as one of development plants for offshore oil resources. In the FPSO unit, pipes called risers are used to transport undersea oil-layer fluid to a production facility in the FPSO unit and re-inject gas and water separated at the production facility in the FPSO unit into the bottom of sea. Patent Literature 1 discloses an example of an inspection apparatus for inspection of offshore pipelines.

### Citation List

### Patent Literature

Patent Literature 1: Japanese Laid-open Patent Publication No. 2013-067358

### Summary

### Technical Problem

There is demand for devisal of techniques for smooth maintenance of pipes under the sea because leaving unattended the damaged or foreign substance-stuck pipes would result in degradation of performance (quality) of the pipes.

An object of the present invention is to provide a maintenance apparatus that allows smooth maintenance of pipes under the sea.

### Solution to Problem

According to an aspect of the present invention, a maintenance apparatus for maintaining a pipe under the sea includes: a first grip device that includes a plurality of joints and includes a first grip portion holding releasably a first portion of the pipe; a second grip device that includes a plurality of joints, includes a second grip portion holding releasably a second portion of the pipe, and is configured to be movable relative to the first grip device; a maintenance device that is mounted on at least one of the first grip device and the second grip device and is used for maintenance of the pipe; and a drive device that drives the first grip device and the second grip device such that the first grip device and at least portion of the second grip device move relative to each other.

According to the present invention, the maintenance apparatus is provided with the first grip portion and the second grip portion capable of holding the pipe, and even if the force of the sea water resulting from tidal current or ocean waves acts on the pipe, at least one of the first grip portion and the second grip portion holds the pipe to prevent the maintenance apparatus from separating from the pipe. Therefore, even in the event of tidal current or ocean waves, the maintenance apparatus can smoothly maintain the pipe under the sea by use of the maintenance device. Each of the first grip portion and the second grip portion has the plurality of joints to hold smoothly pipes of various dimensions (thicknesses). In addition, according to the present invention, the first grip device and at least portion of the second grip device are relatively movable, and the first grip device and the second grip device are allowed to execute different operations. Therefore, the maintenance apparatus can use the maintenance device mounted on at least one of the first grip device and the second grip device capable of executing different operations to execute smoothly various kinds of maintenance.

Advantageously, in the maintenance apparatus, the drive device includes a first grip drive device that is configured to move the first grip portion to hold the pipe by the first grip portion and release the pipe from the first grip portion, a second grip drive device that is configured to move the second grip portion to hold the pipe by the second grip portion and release the pipe from the second grip portion, and a movement device that is configured to move at least one of the first grip device and the second grip device such that the first grip device and the second grip device move relative to each other in at least one direction of a direction around an axis of the pipe, a direction orthogonal to the axis, and a radial direction relative to the axis. This allows the maintenance apparatus to execute smoothly various kinds of maintenance under the sea.

Advantageously, in the maintenance apparatus, the movement device includes a screw arranged at one or both of the first grip device and the second grip device. Accordingly, at least one of the first grip device and the second grip device is movable under the sea due to thrust force generated by the screw.

Advantageously, in the maintenance apparatus, the movement device includes a rotary roller that is provided at one or both of the first grip device and the second grip device so as to be capable of contacting the surface of the pipe and is capable of running over the surface of the pipe. Accordingly, at least one of the first grip device and the second grip device is movable under the sea due to frictional force between the rotary roller and the pipe.

Advantageously, in the maintenance apparatus, the drive device releases the pipe from the second grip portion while the first grip portion holds the pipe, and moves the second grip device relative to the first grip device. Accordingly, the second grip device moves while the pipe and the maintenance apparatus are kept connected, and the maintenance apparatus can use the second grip device to execute smoothly various kinds of maintenance under the sea.

Advantageously, the maintenance apparatus includes a cleaning device provided at at least one of the first grip device and the second grip device. The cleaning device performs cleaning of at least portion of the pipe. Accordingly, the pipe is cleaned to suppress degradation in performance (quality) of the pipe.

Advantageously, in the maintenance apparatus, the pipe is released from the second grip portion while the first grip portion holds the pipe, and the cleaning device provided at the second grip device performs the cleaning while the second grip device moves relative to the first grip device. Accordingly, the pipe can be smoothly cleaned by the cleaning device provided at the second grip device while the pipe and the maintenance apparatus are kept connected. The second grip device is movable, and cleaning the pipe by the cleaning device while moving the second grip device allows various portions of the pipe to be cleaned smoothly.

Advantageously, the maintenance apparatus includes a detection device that is provided at at least one of the first grip device and the second grip device to detect the state of the pipe. Accordingly, it is possible to take an appropriate measure to suppress degradation in performance (quality) of the pipe based on the results of detection of state of the pipe.

Advantageously, in the maintenance apparatus, the pipe is released from the second grip portion while the first grip portion holds the pipe, and the detection device provided at the second grip device detects the state of the pipe while the second grip device moves relative to the first grip device. Accordingly, the state of the pipe can be smoothly detected by the detection device provided at the second grip device while the pipe and the maintenance apparatus are kept connected. The second grip device is movable, and detecting the state of the pipe by the detection device while moving the second grip device makes it possible to smoothly detect the state of various portions of the pipe.

Advantageously, the maintenance apparatus includes a housing that has an internal space where at least portion of the drive device is arranged, and a pressure adjustment device that makes the pressure in the internal space of the housing higher than the pressure in the external space of the housing. This suppresses the ingress of seawater into the internal space of the housing. Accordingly, it is thus possible to prevent the contact of the drive device with seawater and degradation in performance of the drive device.

Advantageously, the maintenance apparatus includes a pressure sensor that detects the pressure in the internal space. The pressure adjustment device adjusts the pressure in the internal space based on the result of detection by the pressure sensor. Accordingly, the pressure in the internal space of the housing can be kept higher than the pressure in the external space of the housing based on the results of detection by the pressure sensor.

Advantageously, in the maintenance apparatus, the first grip portion and the second grip portion is arrange in the external space of the housing. The maintenance apparatus includes: a driving force transfer member that is at least partially arranged in an opening provided in the housing to transfer driving force of the drive device to one or both of the first grip portion and the second grip portion; and a seal member that seals the opening. This suppresses the ingress of seawater via the opening into the internal space of the housing in which the drive device is arranged.

Advantageously, the maintenance apparatus includes a housing that has an internal space where at least portion of the drive device is arranged. The internal space is filled with oil. The oil as an insulating agent prevents the contact between the drive device and seawater and degradation in performance of the drive device.

### Advantageous Effects of Invention

According to the maintenance apparatus according to the present invention, it is possible to maintain smoothly the pipe under the sea.

### Brief Description of Drawings

FIG. 1 is a schematic view of an example of a development plant where a maintenance apparatus according to a first embodiment is used.
FIG. 2 is a perspective view of an example of the maintenance apparatus according to the first embodiment.
FIG. 3 is a diagram illustrating an example of operation of the maintenance apparatus according to the first embodiment.
FIG. 4 is a diagram illustrating an example of operation of the maintenance apparatus according to the first embodiment.
FIG. 5 is a diagram illustrating an example of operation of the maintenance apparatus according to the first embodiment.
FIG. 6 is an exploded perspective view schematically illustrating an example of a drive device according to the first embodiment.
FIG. 7 is a plane view schematically illustrating an example of the drive device according to the first embodiment.
FIG. 8 is a diagram illustrating an example of operation of the maintenance apparatus according to the first embodiment.
FIG. 9 is a diagram illustrating an example of the drive device according to the first embodiment.
FIG. 10 is a diagram illustrating a portion of the maintenance apparatus according to the first embodiment.
FIG. 11 is a diagram illustrating a portion of the maintenance apparatus according to the first embodiment.
FIG. 12 is a diagram illustrating a portion of the maintenance apparatus according to the first embodiment.
FIG. 13 is a diagram schematically illustrating an example of a drive device according to a second embodiment.
FIG. 14 is a diagram schematically illustrating an example of a drive device according to a third embodiment.
FIG. 15 is a diagram schematically illustrating an example of a drive device according to the third embodiment.
FIG. 16 is a diagram illustrating portion of the maintenance apparatus according to a fourth embodiment. Description of Embodiments

Embodiments according to the present invention will be described with reference to the drawings, but the present invention is not limited to them. The requirements for the embodiments described below can be combined together as appropriate. In addition, some of the constituent elements may not be used. In the following description, a XYZ orthogonal coordinate system is set, and the positional relationships among the components are described with reference to the XYZ orthogonal coordinate system. One direction in a predetermined plane is designated as an X-axis direction, the direction orthogonal to the X-axis direction in the predetermined plane is designated as a Y-axis direction, and the direction orthogonal to the X-axis and Y-axis directions is designated as a Z-axis direction. Rotational (inclined) directions around the X, Y, and Z axes are designated as θX, θY, and θZ, respectively.

### <First Embodiment>

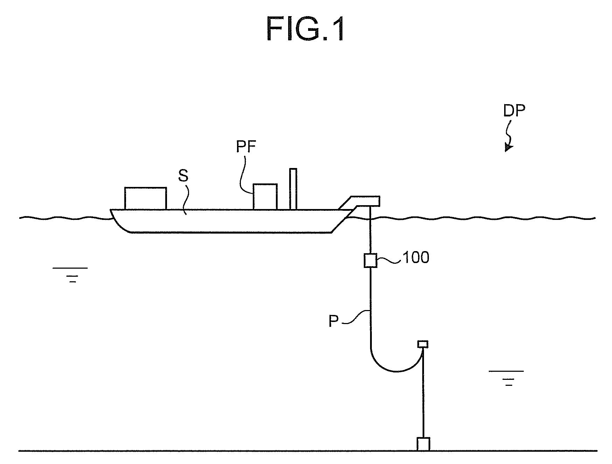

A first embodiment will be described. FIG. 1 is a schematic view illustrating an example of a maintenance apparatus 100 according to this embodiment and a development plant DP for offshore oil resources where the maintenance apparatus 100 is used. The development plant DP includes floating production, storage and offloading (FPSO) unit.

The development plant DP includes a ship S, a production facility PF arranged in the ship S, and a pipe P for transport of an oil-layer fluid from a seafloor oil well to the production facility PF. The pipe P is also called riser and is used to transport an oil-layer fluid from the sea floor to the production facility PF and re-inject gas and water separated at the production facility PF into the sea floor. The pipe P includes a flexible riser. The flexure of the pipe P would mitigate influence of force of seawater resulting from tidal current and ocean waves on the pipe P, and suppress concentration of stress on the pipe P. Alternatively, the pipe P may include a hard-to-bend rigid riser.

The pipe P is placed under the sea and is subject to the force of seawater resulting from tidal current and ocean waves, and thus at least portion of the pipe P is likely to reduce in durability. In addition, foreign substances such as marine organisms may stick to the pipe P. If the damaged pipe P or foreign substance-stuck pipe P is left unattended, the performance (quality) of the pipe P is prone to degradation. Accordingly, in this embodiment, the pipe P is maintained by the maintenance apparatus 100 under the sea.

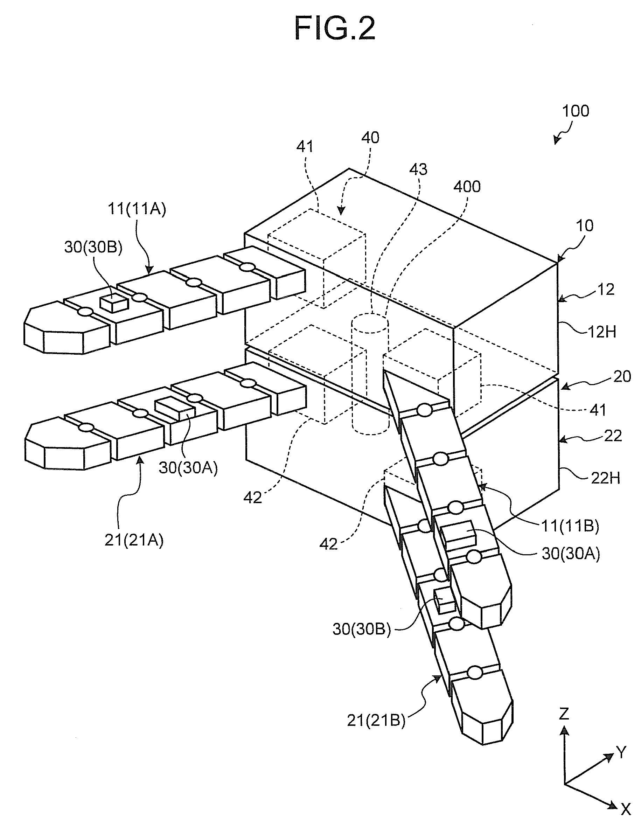

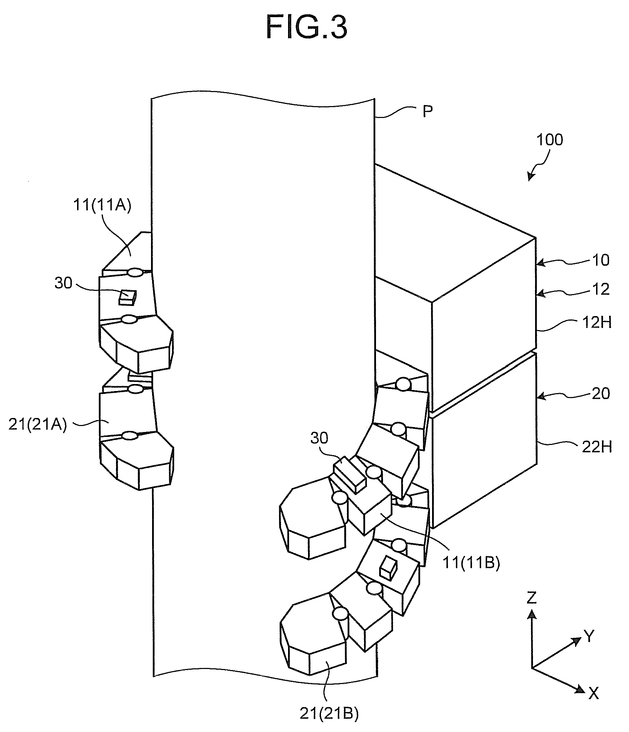

FIG. 2 is a perspective view of an example of the maintenance apparatus 100 according to this embodiment. FIG. 3 is a diagram illustrating an example of a state where the maintenance apparatus 100 holds the pipe P. In the following description, the axis of the pipe P and the Z axis are parallel to each other.

Referring to FIGS. 2 and 3, the maintenance apparatus 100 includes: a first grip device 10 capable of holding the pipe P; a second grip device 20 capable of holding the pipe P and moving relative to the first grip device 10; a maintenance device 30 that is mounted on at least one of the first grip device 10 and the second grip device 20 and is used for maintenance of the pipe P; and a drive device 40 that drives the first grip device 10 and the second grip device 20 such that the first grip device 10 and at least portion of the second grip device 20 move relative to each other.

The first grip device 10 includes a grip portion 11 having a plurality of joints and holding releasably the pipe P and a support portion 12 supporting the grip portion 11. The second grip device 20 includes a grip portion 21 having a plurality of joints and holding releasably the pipe P and a support portion 22 supporting the grip portion 21.

The first grip device 10 and the second grip device 20 are arranged along the Z-axis direction. The grip portion 11 holds a first portion of the pipe P, and the grip portion 21 holds a second portion of the pipe P different from the first portion relative to the Z-axis direction. The support portion 12 and the support portion 22 are coupled by a coupling mechanism 400 so as to be capable of relative movement.

The grip portion 11 includes a grip portion 11A and a grip portion 11B arranged at different positions on the support portion 12 with respect to the X-axis direction. The first grip device 10 holds the pipe P arranged between the grip portion 11A and the grip portion 11B by the grip portion 11A and the grip portion 11B. The grip portion 11A and the grip portion 11B are arranged at different positions on the support portion 12 with respect to the Z-axis direction.

The grip portion 21 includes a grip portion 21A and a grip portion 21B arranged at different positions on the support portion 22 with respect to the X-axis direction. The second grip device 20 holds the pipe P arranged between the grip portion 21A and the grip portion 21B by the grip portion 21A and the grip portion 21B. The grip portion 21A and the grip portion 21B are arranged at different positions on the support portion 22 with respect to the Z-axis direction.

The drive device 40 drives the first grip device 10 and the second grip device 20 such that the first grip device 10 and at least portion of the second grip device 20 move relative to each other. The drive device 40 includes a grip drive device 41 moving the grip portion 11, a grip drive device 42 moving the grip portion 21, and a movement device 43 moving the first grip device 10 and the second grip device 20 relative to each other.

The grip drive device 41 moves the grip portion 11 such that the grip portion 11 is bent or extended. The grip portion 11 has a plurality of joints and is changeable from one of the bent state and the extended state to the other state. As illustrated in FIG. 3, when the grip portion 11 is bent, the pipe P is held by the grip portion 11. As illustrated in FIG. 2, when the grip portion 11 is extended, the pipe P is released from the grip portion 11. The grip drive device 41 bends or extends the grip portion 11 to hold or release the pipe P. The support portion 12 of the first grip device 10 includes a housing 12H having an internal space, and at least portion of the grip drive device 41 is arranged in the internal space of the housing 12H.

The grip portion 21 and the grip drive device 42 have the same structure and function as those of the grip portion 11 and the grip drive device 41. The support portion 22 of the second grip device 20 includes a housing 22H having an internal space and at least portion of the grip drive device 42 is arranged in the internal space of the housing 22H.

The coupling mechanism 400 coupling the support portion 12 and the support portion 22 includes a movement device 43. While the support portion 12 and the support portion 22 are connected (coupled), the movement device 43 moves at least one of the support portion 12 of the first grip device 10 and the support portion 22 of the second grip device 20 such that the first grip device 10 and the second grip device 20 move relative to each other.

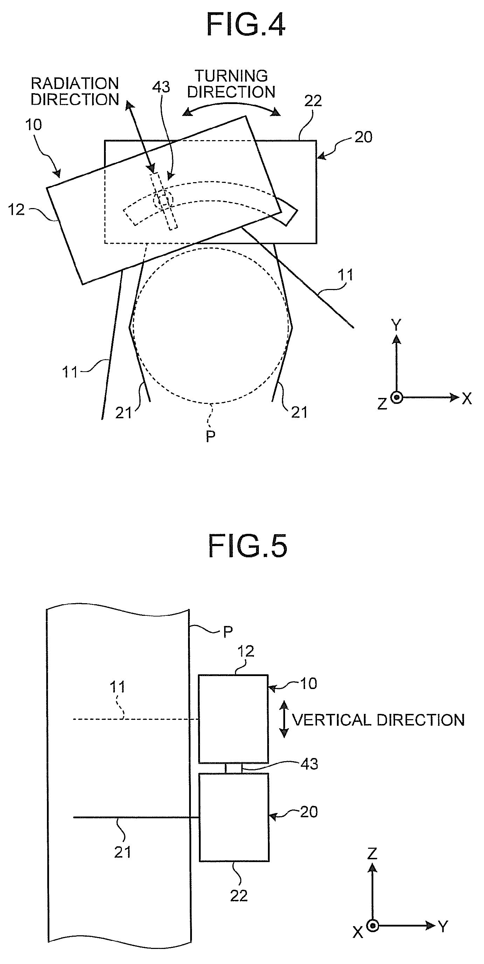

FIGS. 4 and 5 are diagrams illustrating examples in which the first grip device 10 and the second grip device 20 move to each other by operation of the movement device 43. As illustrated in FIG. 4, the movement device 43 can move the first grip device 10 (support portion 12) and the second grip device 20 (support portion 22) relative to each other in a direction around the axis of the pipe P (θZ direction, turning direction, circumferential direction of the pipe P). For example, when the pipe P is held by the grip portion 21 and is released from the holding by the grip portion 11, the movement device 43 is activated to move the first grip device 10 in the turning direction relative to the pipe P and the second grip device 20. When the pipe P is held by the grip portion 11 and is released from the holding by the grip portion 21, the movement device 43 is activated to move the second grip device 20 in the turning direction relative to the pipe P and the first grip device 10.

The movement device 43 can also move the first grip device 10 (support portion 12) and the second grip device 20 (support portion 22) relative to each other in a radial direction relative to the axis of the pipe P. For example, when the pipe P is held by the grip portion 21 and is released from the holding by the grip portion 11, the movement device 43 is activated to move the first grip device 10 in the radial direction relative to the pipe P and the second grip device 20. When the pipe P is held by the grip portion 11 and is released from the holding by the grip portion 21, the movement device 43 is activated to move the second grip device 20 in the radial direction to the axis of the pipe P relative to the pipe P and the first grip device 10.

In addition, as illustrated in FIG. 5, the movement device 43 can move the first grip device 10 (support portion 12) and the second grip device 20 (support portion 22) relative to each other in the direction parallel to the axis of the pipe P (Z-axis direction, vertical direction, and longitudinal direction of the pipe P). For example, when the pipe P is held by the grip portion 21 and is released from the holding by the grip portion 11, the movement device 43 is activated to move the first grip device 10 in the vertical direction relative to the pipe P and the second grip device 20. When the pipe P is held by the grip portion 11 and is released from the holding by the grip portion 21, the movement device 43 is activated to move the second grip device 20 in the vertical direction relative to the pipe P and the first grip device 10.

In the following description, the state where the pipe P is held by the grip portion 11 (grip portion 21) will be appropriately referred to as the holding state of the grip portion 11 (grip portion 21), and the state where the pipe P is released from the holding by the grip portion 11 (grip portion 21) will be appropriately referred to as the releasing state of the grip portion 11 (grip portion 21).

In this embodiment, the drive device 40 can move the first grip device 10 and the second grip device 20 in the turning direction and the vertical direction. For example, the drive device 40 performs repeatedly the action of bringing the grip portion 11 into the holding state, bringing the grip portion 21 into the releasing state, and moving the second grip device 20 in the turning direction and the action of bringing the grip portion 21 into the holding state, bringing the grip portion 11 into the releasing state, and moving the first grip device 10 in the turning direction, thereby to move the first grip device 10 and the second grip device 20 around the pipe P. For example, in the case of moving the maintenance apparatus 100 in a +θZ (clockwise) direction about the axis of the pipe P, the drive device 40 performs repeatedly the action of bringing the grip portion 11 into the holding state, bringing the grip portion 21 into the releasing state, and turning the second grip device 20 in the +θZ (clockwise) direction and the action of bringing the grip portion 21 into the holding state, bringing the grip portion 11 into the releasing state, and turning the first grip device 10 in the +θZ (clockwise) direction. By performing reversely the foregoing actions, the maintenance apparatus 100 can be moved in a -θZ (counterclockwise) direction.

The drive device 40 also performs repeatedly the action of bringing the grip portion 11 into the holding state, bringing the grip portion 21 into the releasing state, and moving the second grip device 20 in the vertical direction and the action of bringing the grip portion 21 into the holding state, bringing the grip portion 11 into the releasing state, and moving the first grip device 10 in the vertical direction, thereby to move the first grip device 10 and the second grip device 20 in the vertical direction. For example, in the case of moving the maintenance apparatus 100 in the upward direction (+Z direction and sea surface direction), the drive device 40 performs repeatedly the action of bringing the grip portion 21 into the holding state, bringing the grip portion 11 into the releasing state, and moving the first grip device 10 in the +Z direction and the action of bringing the grip portion 11 into the holding state, bringing the grip portion 21 into the releasing state, and moving the second grip device 20 in the +Z direction. By performing reversely the foregoing actions, the maintenance apparatus 100 can be moved in the downward direction (-Z direction and sea floor direction).

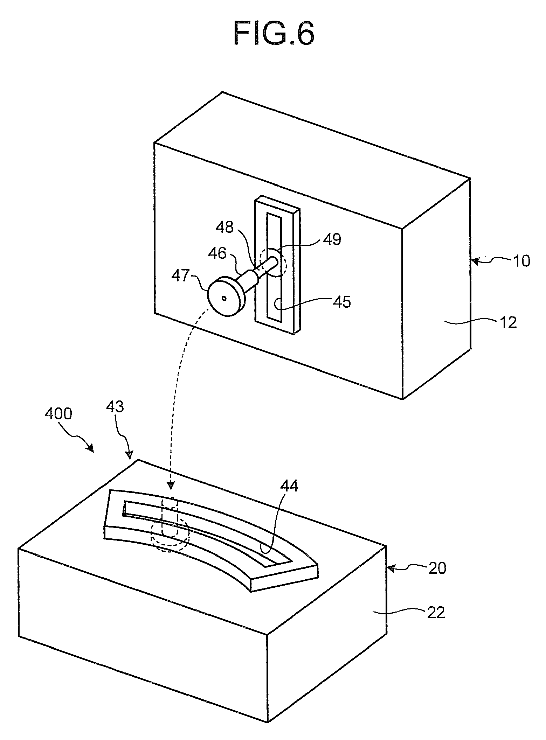

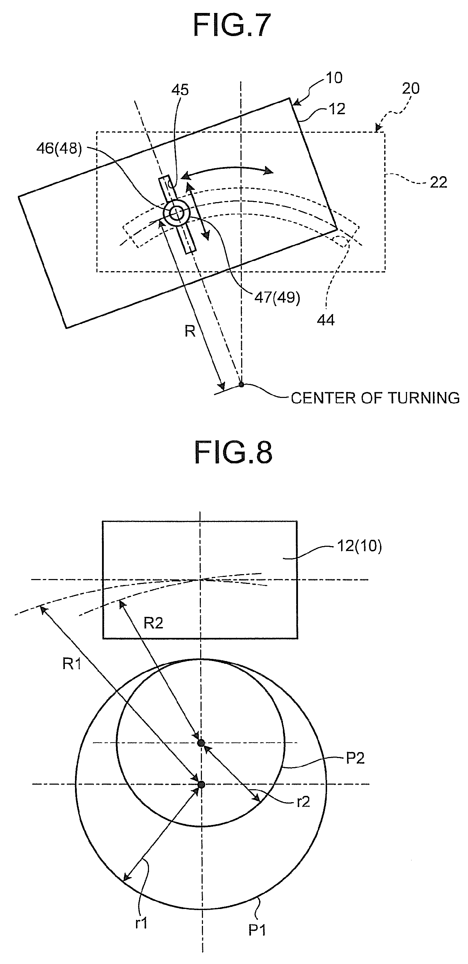

FIG. 6 is an exploded perspective view schematically illustrating an example of the movement device 43. FIG. 7 is a plane view schematically illustrating an example of the movement device 43. FIGS. 6 and 7 do not illustrate the grip portion 11 and the grip portion 21.

As illustrated in FIGS. 6 and 7, the movement device 43 in the coupling mechanism 400 includes: a turning direction guide portion 44 provided at the top surface of the support portion 22 (housing 22H); a radial direction guide portion 45 provided at the bottom surface of the support portion 12 (housing 12H); a rotary roller 47 that is rotatably supported by a shaft member 46 and rotated by operation of an actuator (not illustrated); and a rotary roller 49 that is rotatably supported by a shaft member 48 and rotated by operation of the actuator (not illustrated). The shaft member 46 and the shaft member 48 are coupled together. The turning direction guide portion 44 is a curve guide curving and surrounding portion of the periphery of the pipe P. The radial direction guide portion 45 is a direct acting guide.

The rotary roller 47 includes a pinion (gear) and can be arranged at the turning direction guide portion 44. The turning direction guide portion 44 includes a rack engaging with the teeth of the rotary roller 47. As the rotary roller 47 arranged at the turning direction guide portion 44 rotates, the rotary roller 47, the shaft member 46, the shaft member 48, and the rotary roller 49 are guided by the turning direction guide portion 44 to move in the turning direction. This allows the first grip device 10 to move in the turning direction relative to the second grip device 20. By bringing the grip portion 21 into the holding state, bringing the grip portion 11 into the releasing state, and rotating the rotary roller 47, the first grip device 10 is moved in the turning direction around the pipe P. In addition, by bringing the grip portion 11 into the holding state, bringing the grip portion 21 into the releasing state, and rotating the rotary roller 47, the second grip device 20 is moved in the turning direction around the pipe P.

The rotary roller 49 includes a pinion (gear) and can be arranged at the radial direction guide portion 45. The radial direction guide portion 45 includes a rack engaging with the teeth of the rotary roller 49. As the rotary roller 49 arranged at the radial direction guide portion 45 rotates, the rotary roller 49, the shaft member 48, the shaft member 46, and the rotary roller 47 are guided by the radial direction guide portion 45 to move in the radial direction relative to the axis of the pipe P. This allows the first grip device 10 to move in the radial direction relative to the second grip device 20. By bringing the grip portion 21 into the holding state, bringing the grip portion 11 into the releasing state, and rotating the rotary roller 49, the first grip device 10 is moved in the radial direction around the pipe P. In addition, by bringing the grip portion 11 into the holding state, bringing the grip portion 21 into the releasing state, and rotating the rotary roller 49, the second grip device 20 is moved in the radial direction around the pipe P.

In this embodiment, the shaft member 46 supports the shaft member 48 so as to be movable in the vertical direction. The shaft member 46 and the shaft member 48 are relatively movable in the vertical direction by operation of the actuator (not illustrated). The shaft member 46 may be a cylinder member and the shaft member 48 may be movably supported by the cylinder member. This allows the first grip device 10 to move in the vertical direction relative to the second grip device 20. By bringing the grip portion 21 into the holding state, bringing the grip portion 11 into the releasing state, and moving the shaft member 48 in the vertical direction relative to the shaft member 46, the first grip device 10 is moved in the vertical direction relative to the pipe P. By bringing the grip portion 11 into the holding state, bringing the grip portion 21 into the releasing state, and moving the shaft member 48 in the vertical direction relative to the shaft member 46, the second grip device 20 is moved in the vertical direction relative to the pipe P.

As illustrated in FIG. 7, as the support portion 12 moves in the radial direction, a distance (turning radius) R between the center of turning at the time of the movement in the turning direction and the support portion 12 (shaft member 46) changes. The same thing applies to the support portion 22, and the distance R between the center of turning and the support portion 22 changes with the movement of the support portion 22. In this embodiment, based on the radius (dimension) of the pipe P, the first grip device 10 and the second grip device 20 move in the radial direction. Even with a change in the radius of the pipe P, the first grip device 10 and the second grip device 20 move in the radial direction to allow smooth movement in the turning direction.

Specifically, the coupling mechanism 400 has a variable mechanism capable of changing the distance R from the center of turning (center of the pipe P) allows the maintenance apparatus 100 to support movement in the turning direction around the pipes P with various outer diameters. When the coupling mechanism 400 has no variable mechanism capable of changing the distance R, there is the possibility that the maintenance apparatus 100 cannot support the movement in the turning direction around the peripheries of the pipes P with different outer diameters. To support the movement in the turning direction around the pipes P with different outer diameters, it is necessary to provide the variable mechanism capable of changing the distance R from the center of turning as illustrated in FIG. 7. In this embodiment, the variable mechanism is provided so that, even if the maintenance apparatus 100 is applied to the pipes P with different outer diameters, the first grip device 10 and the second grip device 20 are allowed to move smoothly in the turning direction around the pipe P.

FIG. 8 schematically illustrates an example in which the support portion 12 of the first grip device 10 is arranged around a pipe P1 with a radius r1 and a pipe P2 with a radius r2 smaller than the radius r1. In the case of turning the support portion 12 around the pipe P1, the position (turning radius R1) of the support portion 12 relative to the radial direction is decided such that the center (axis) of the pipe P1 and the center of turning of the support portion 12 align with each other and the support portion 12 and the pipe P1 do not contact each other due to turning. Similarly, in the case of turning the support portion 12 around the pipe P2, the position (turning radius R2) of the support portion 12 relative to the radial direction is decided such that the center (axis) of the pipe P2 and the center of turning of the support portion 12 align with each other and the support portion 12 and the pipe P2 do not contact each other due to turning. The same thing applies to the case of turning the support portion 22. When the maximum radius of the pipe P assumed to be maintained by the maintenance apparatus 100 is designated as Ra and the minimum radius of the same as Rb, the curvature radius of the turning direction guide portion 44 is determined as (Ra + Rb)/2.

The curvature radius of the turning direction guide portion 44 is not limited to this. The curvature radius of the turning direction guide portion 44 can be set to various values within a range in which the rotary roller 47 can move the turning direction guide portion 44 based on the radius (outer diameter) of the pipe P assumed to be maintained. In the foregoing example, the curvature radius of the turning direction guide portion 44 is set to the average value between the maximum radius Ra and the minimum radius Rb. Alternatively, the curvature radius may be closer to the maximum radius Ra than the average value or may be closer to the minimum radius Rb than the average value. The turning direction guide portion 44 may not be portion of a circle (arc-shaped) but may be portion of an oval, for example. In addition, a clearance (play or backlash) may be created between the rotary roller 47 and the turning direction guide portion 44. By providing the clearance, the support portion 12 (support portion 22) is allowed to move by the clearance even when the support portion 12 (support portion 22) and the pipe P contact each other due to movement in the turning direction, whereby the support portion 12 (support portion 22) is allowed to move smoothly in the turning direction. That is, by providing the clearance, the support portion 12 (support portion 22) is allowed to smoothly turn around the pipe P even with a change in the radius of the pipe P, for example. In addition, by providing the clearance, as far as the radius (outer diameter) of the pipe P changes slightly, the support portion 12 (support portion 22) is allowed to turn around the pipe P without having to move the rotary roller 49 along the radial direction guide portion 45.

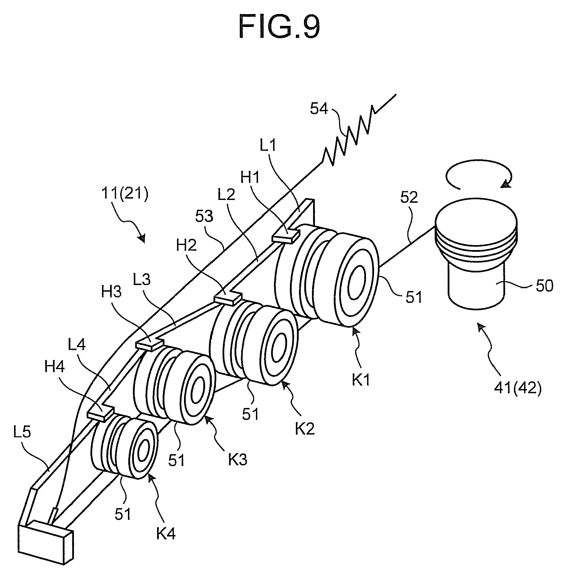

FIG. 9 is a diagram illustrating an example of principles for operation of the grip portion 11 and the grip drive device 41. In this embodiment, the grip portion 11 and the grip drive device 41 include a link mechanism and a drive motor as disclosed in Japanese Laid-open Patent Publication No. 11-267987.

As illustrated in FIG. 9, the grip portion 11 includes multi-jointed fingers with a plurality of joints, and has a link L1, a link L2, a link L3, a link L4, and a ring L5. The link L1 is arranged at a base end portion of the grip portion 11, a link L5 is arranged at a tip end portion of the grip portion 11, and the link L2, the link L3, and the link L4 are arranged between the link L1 and the link L5. The link L1 and the link L2 are connected via a first joint K1, the link L2 and the link L3 are connected via a second joint K2, the link L3 and the link L4 are connected via a third joint K3, and the link L4 and the link L5 are connected via a fourth joint K4. Each of the joints connects the two links to be connected in a rotatable and fixable manner. Each of the first joint K1, the second joint K2, the third joint K3, and the fourth joint K4 is provided with a pulley 51.

The grip drive device 41 includes a drive wire 52 wound around the pulleys 51 and a drive motor 50 connected to a base end portion of the drive wire 52 to wind up the drive wire 52. The drive wire 52 has a tip end portion fixed to the pulley 51 of the fourth joint K4. When the drive motor 50 winds up the drive wire 52, the pulleys 51 of the first joint K1, the second joint K2, the third joint K3, and the fourth joint K4 rotate. Accordingly, the first joint K1, the second joint K2, the third joint K3, and the fourth joint K4 are bent. The relative positions of the link L1, the link L2, the link L3, the link L4, and the link L5 change to bent the grip portion 11 and hold the pipe P by the grip portion 11.

The grip drive device 41 also includes a return wire 53 fixed to the tip end portion of the link L5 and a return spring 54 connected to the base end portion of the return wire 53. When the drive wire 52 is loosened, the return wire 53 is returned by the return spring 54. Accordingly, the relative positions of the link L1, the link L2, the link L3, the link L4, and the link L5 change to extend the grip portion 11 and release the pipe P from the grip portion 11.

As described above, in this embodiment, the grip portion 11 is moved by the grip drive device 41 including the drive wire 52, the drive motor 50, the return wire 53, and the return spring 54. The grip drive device 41 moves the grip portion 11 to hold the pipe P by the grip portion 11 or release the pipe P from the grip portion 11.

The grip drive device 41 also includes: a regulation member H1 that suppresses excessive bending of the first joint K1 due to the force of the return wire 53 (return spring 54); a regulation member H2 that suppresses excessive bending of the second joint K2; a regulation member H3 that suppresses excessive bending of the third joint K3; and a regulation member H4 that suppresses excessive bending of the fourth joint K4. Referring to FIG. 9, when the drive motor 50 winds up the drive wire 52, the first joint K1, the second joint K2, the third joint K3, and the fourth joint K4 bend to move the tip end portion (link L5) of the grip portion 11 downward in FIG. 9. Meanwhile, the drive wire 52 is loosened, the return wire 53 is returned by the return spring 54, the tip end portion (link L5) of the grip portion 11 moves upward in FIG. 9. In this embodiment, when the drive wire 52 is loosened and the return wire 53 is returned, the regulation member H1 regulates excessive bending of the first joint K1 such that the upper end surface of the link L1 and the upper end surface of the link L2 are arranged in the same plane (such that the link L1 and the link L2 are straightly extended). The regulation member H1 includes a convex at the link L1 capable of contacting with the upper end surface of the link L2. Even when the relative positions of the link L1 and the link L2 change to move upward the tip end portion of the grip portion 11 by the force of the return wire 53 (return spring 54), the regulation member H1 provided at the link L1 and the link L2 contact each other to suppress excessive bending of the first joint K1 and allow the link L1 and the link L2 to extend straightly. The regulation member H2 includes a convex at the link L2 capable of contacting with the upper end surface of the link L3. The regulation member H3 includes a convex at the link L3 capable of contacting with the upper end surface of the link L4. The regulation member H4 includes a convex at the link L4 capable of contacting with the upper end surface of the link L5. The regulation member H2, the regulation member H3, and the regulation member H4 are the same in function as the regulation member H1. When the drive wire 52 is loosened and the return wire 53 is returned by the regulation member H1, the regulation member H2, the regulation member H3, and the regulation member H4, the relative positions of the link L1, the link L2, the link L3, the link L4, and the link L5 are kept to extend the grip portion 11 straightly.

The principles for operation of the grip portion 11 and the grip drive device 41 have been described so far. The grip portion 21 and the grip drive device 42 operate under the same principles as those for the grip portion 11 and the grip drive device 41, and thus descriptions thereof are omitted. The grip drive device 42 moves the grip portion 21 to allow the pipe P to be held by the grip portion 21 or released from the grip portion 21.

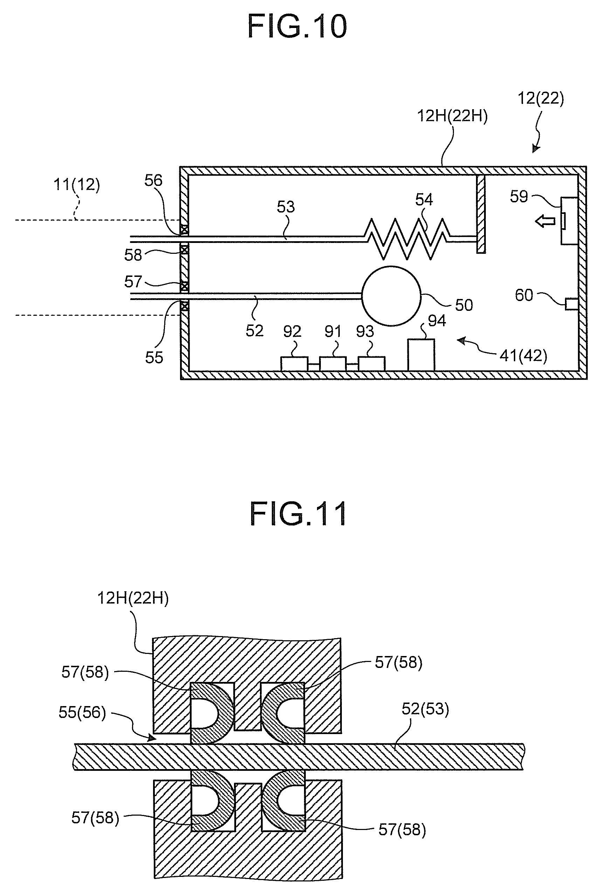

FIG. 10 is a diagram schematically illustrating an example of the housing 12H of the support portion 12. As illustrated in FIG. 10, at least portion of the grip drive device 41 is arranged in the internal space of the housing 12H, and the grip portion 11 is arranged in the external space of the housing 12H. In this embodiment, the drive motor 50, the return spring 54, portion of the drive wire 52, and portion of the return wire 53 are arranged in the internal space of the housing 12H. The housing 12H contains a control device 91 including a CPU capable of controlling the maintenance apparatus 100, a storage device 92 connected to the control device 91, a communication device 93, and a battery 94. The control device 91 and the storage device 92 may be implemented in the drive device 40.

The maintenance apparatus 100 includes a pressure adjustment device 59 that adjusts the pressure in the internal space of the housing 12H. The internal space of the housing 12H is filled with gas (air), and the pressure adjustment device 59 supplies the gas to the internal space of the housing 12H to adjust the pressure. The pressure adjustment device 59 adjusts the pressure in the internal space such that the pressure in the internal space of the housing 12H is higher than the pressure in the external space. The external space of the housing 12H is a seawater space (liquid space), and the internal space of the housing 12H is a gas space. By adjusting the pressure in the internal space of the housing 12H such that the pressure in the internal space is higher than the pressure in the external space, the ingress of seawater from the external space into the internal space is suppressed. In this embodiment, the ship S and the gas supply inlet of the pressure adjustment device 59 facing the internal space are connected together via a tube. The gas is supplied from the ship S to the internal space of the housing 12H via the tube.

In this embodiment, the maintenance apparatus 100 includes a pressure sensor 60 that detects the pressure in the internal space of the housing 12H. The pressure sensor 60 monitors constantly the pressure in the internal space. The result of detection by the pressure sensor 60 is output to the pressure adjustment device 59. The pressure adjustment device 59 adjusts the pressure in the internal space of the housing 12H based on the result of detection by the pressure sensor 60. The housing 12H is equipped with a depth gauge. The pressure adjustment device 59 predicts the pressure in the external space of the housing 12H based on the result of measurement by the depth gauge, and adjusts the pressure in the internal space based on the result of detection by the pressure sensor 60 such that the pressure in the internal space is higher than the pressure in the external space. A pressure sensor capable of detecting the pressure in the external space of the housing 12H may be provided. The pressure adjustment device 59 may adjust the pressure in the internal space based on the result of detection of pressure in the external space and the result of detection of pressure in the internal space such that the pressure in the internal space is higher than the pressure in the external space.

The maintenance apparatus 100 includes the pressure adjustment device 59 that adjusts the pressure in the internal space of the housing 22H and the pressure sensor 60 that detects the pressure in the internal space of the housing 22H. The structure of the housing 22H is the same as that of the housing 12H. The structures and functions of the pressure adjustment device 59 and the pressure sensor 60 provided in the housing 22H are the same as those of the pressure adjustment device 59 and the pressure sensor 60 provided in the housing 12H. The maintenance apparatus 100 is capable of adjusting the pressure in the internal space of the housing 22H by the method for adjusting the pressure in the internal space of the housing 12H.

The housing 12H is provided with an opening 55 and an opening 56 that penetrate through the internal space and the external space of the housing 12H. The drive motor 50 and the return spring 54 are arranged in the internal space of the housing 12H, and the pulleys 51 and the link L5 of the grip portion 11 are arranged in the external space of the housing 12H. At least portion of the drive wire 52 is arranged in the opening 55 to transfer the driving force of the drive motor 50 to the grip portion 11 (pulleys 51). At least portion of the return wire 53 is arranged in the opening 56 to transfer the driving force (elastic force or resilience) of the return spring 54 to the grip portion 11 (the link L5).

In this embodiment, the maintenance apparatus 100 has a seal member 57 that seals the opening 55 and a seal member 58 that seals the opening 56.

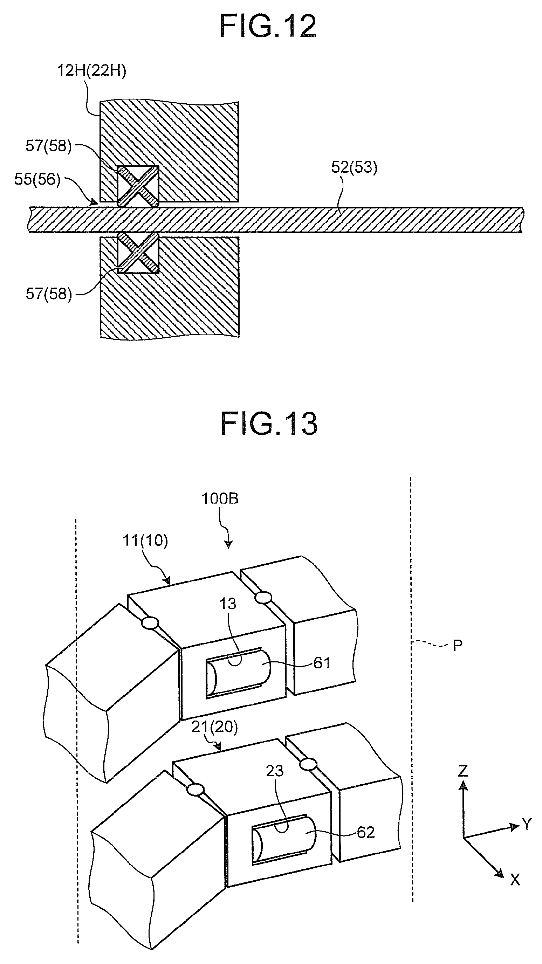

FIG. 11 is an enlarged cross-sectional view of the opening 55 and the seal member 57 and their neighborhood. FIG. 12 illustrates another example of the seal member 57. As illustrated in FIGS. 11 and 12, the seal member 57 is arranged to close the opening 55 in which the drive wire 52 is arranged. Arranging the seal member 57 to close the opening 55 suppresses the ingress of the seawater in the external space into the internal space of the housing 12H via the opening 55.

The opening 56 in which at least portion of the return wire 53 is arranged and the seal member 58 arranged to close the opening 56 are the same in structure as the opening 55 and the seal member 57. Descriptions of the opening 56 and the seal member 58 are omitted.

As in the housing 12H of the support portion 12, the drive motor 50, the return spring 54, portion of the drive wire 52, and portion of the return wire 53 are arranged in the internal space of the housing 22H of the support portion 22, and the grip portion 21 is arranged in the external space of the same, and the opening 55 and the opening 56 are provided in the housing 22H. The seal member 57 is arranged in the opening 55, and the seal member 58 is arranged in the opening 56. A battery may be arranged in the internal space of the housing 22H.

Next, the maintenance device 30 will be described. The maintenance device 30 is used for maintenance of the pipe P and is mounted in at least one of the first grip device 10 and the second grip device 20. As illustrated in FIGS. 2 and 3, in this embodiment, the maintenance device 30 is mounted on the grip portion 11 and the grip portion 21.

In this embodiment, the maintenance device 30 includes a cleaning device 30A for cleaning the pipe P. The cleaning device 30A includes at least one of a cleaning brush and a cutter for removing foreign substances from the surface of the pipe P. The cutter includes a shell-removal cutter for removing shells stuck to the surface of the pipe P, for example.

The maintenance device 30 also includes a detection device 30B that detects the state of the pipe P. The detection device 30B includes at least one of a camera capable of taking images of the surface of the pipe P, an inspection unit that inspects the pipe P non-destructively by use of overcurrent, an ultrasound inspection unit that inspects the pipe P by use of ultrasound, and an X-ray inspection unit that inspects the pipe P by use of X rays.

Next, a method for maintaining the pipe P according to this embodiment will be described. In the example described below, the maintenance device 30 is the cleaning device 30A. The maintenance apparatus 100 cleans the surface of the pipe P by using the grip drive device 41 and the grip drive device 42 to move the grip portion 11 and the grip portion 21 where the cleaning device 30A is mounted while the cleaning device 30A and the foreign substance on the surface of the pipe P are in contact with each other. For example, in the case of cleaning the pipe P by use of the cleaning device 30A mounted on the grip portion 11, the maintenance apparatus 100 brings the grip portion 11 into the releasing state, brings the grip portion 21 into the holding state, and moves the grip portion 11 to clean the pipe P by the cleaning device 30A mounted on the grip portion 11 while the pipe P and the maintenance apparatus 100 are kept connected.

Alternatively, the maintenance apparatus 100 may bring the grip portion 11 into the holding state, bring the grip portion 21 into the releasing state, and move the second grip device 20 by use of the movement device 43 to clean the pipe P by the cleaning device 30A mounted on the grip portion 21, or may bring the grip portion 21 into the holding state, bring the grip portion 11 into the releasing state, and move the first grip device 10 by use of the movement device 43 to clean the pipe P by the cleaning device 30A provided at the grip portion 11. This also allows the pipe P to be cleaned by the cleaning device 30A mounted on the grip portion 11 and the grip portion 21.

At the cleaning of the pipe P by use of the cleaning device 30A, as described above with reference to FIGS. 4, 5, and others, the maintenance apparatus 100 may perform repeatedly the action of bringing the grip portion 11 into the holding state, bringing the grip portion 21 into the releasing state, and moving the support portion 22, and the action of bringing the grip portion 21 into the holding state, bringing the grip portion 11 into the releasing state, and moving the support portion 12, thereby to clean the surface of the pipe P by the cleaning device 30A while the maintenance apparatus 100 moves in at least one of the +θZ direction, the -θZ direction, the +Z direction, and the -Z directions. This makes it possible to clean smoothly various portions of the pipe P.

Next, the example in which the maintenance device 30 is the detection device 30B will be described. In this case, the maintenance apparatus 100 brings the grip portion 11 into the holding state, brings the grip portion 21 into the releasing state, and moves the grip portion 21 to detect the state of the pipe P by the detection device 30B mounted on the grip portion 21. This makes it possible to detect arbitrary portions on the surface of the pipe P by the detection device 30B.

Alternatively, the maintenance apparatus 100 may bring the grip portion 11 into the holding state, bring the grip portion 21 into the releasing state, and move the second grip device 20 by use of the movement device 43 to detect the state of the pipe P by the detection device 30B provided at the grip portion 21, or may bring the grip portion 21 into the holding state, bring the grip portion 11 into the releasing state, and move the first grip device 10 by use of the movement device 43 to detect the state of the pipe P by the detection device 30B provided at the grip portion 11. This also makes it possible to detect arbitrary portions on the surface of the pipe P by the detection device 30B mounted on the grip portion 11 and the grip portion 21.

In the detection process using the detection device 30B, as described above with reference to FIGS. 4, 5, and others, the maintenance apparatus 100 may perform repeatedly the action of bringing the grip portion 11 into the holding state, bringing the grip portion 21 into the releasing state, and moving the support portion 22, and the action of bringing the grip portion 21 into the holding state, bringing the grip portion 11 into the releasing state, and moving the support portion 12, thereby to detect the state of the pipe P by the detection device 30B while the maintenance apparatus 100 moves in at least one of the +θZ direction, the -θZ direction, the +Z direction, and the -Z directions. This makes it possible to detect smoothly the state of various portions of the pipe P.

The results of detection by the detection device 30B may be transmitted to the ship S via the communication device 93, for example. In addition, the results of detection by the detection device 30B may be stored in the storage device 92. Upon completion of the maintenance, the results of detection by the detection device 30B stored in the storage device 92 may be extracted after the maintenance apparatus 100 is raised onto the ship S. Based on the results of detection by the detection device 30B, appropriate measure (maintenance) is taken to suppress degradation in performance (quality) of the pipe P.

As described above, according to this embodiment, the maintenance apparatus 100 is provided with the grip portion 11 and the grip portion 21 capable of holding the pipe P to suppress separation of the maintenance apparatus 100 from the pipe P because, even under the force of seawater resulting from tidal current and ocean waves, at least one of the grip portion 11 and the grip portion 21 holds the pipe P. Therefore, the maintenance apparatus 100 can maintain smoothly the pipe P under the sea by use of the maintenance device 30 even in the event of occurrence of tidal current and ocean waves. In addition, both the grip portion 11 and the grip portion 21 have a plurality of joints to allow smooth holding of the pipes P of various dimensions (thicknesses).

In addition, according to this embodiment, the first grip device 10 and the second grip device 20 are relatively movable, and perform repeatedly the actions of bringing the grip portion 11 into the holding state and the releasing state, the actions of bringing the grip portion 21 into the releasing state and the holding state, and the action of moving relatively the support portion 12 and the support portion 22 in synchronization with the actions of bringing the grip portion 11 and the grip portion 21 into the holding state and the releasing state, thereby to move the maintenance apparatus 100 in at least one of the +θZ direction, the -θZ direction, the +Z direction, and the -Z direction. Therefore, the maintenance apparatus 100 can access various portions of the pipe P and maintain smoothly the portions.

### <Second Embodiment>

A second embodiment will be described. In the following description, the components identical or equivalent to those in the foregoing embodiment are given the same reference signs as those in the foregoing embodiment, and descriptions thereof are simplified or omitted.

FIG. 13 is a diagram illustrating an example of a maintenance apparatus 100B according to this embodiment. In this embodiment, the maintenance apparatus 100B has a rotary roller 61 that is capable of contacting the surface of the pipe P and is arranged in a concave 13 of the grip portion 11 and a rotary roller 62 that is capable of contacting the surface of the pipe P and is arranged in a concave 23 of the grip portion 21. Each of the rotary roller 61 and the rotary roller 62 is rotatably supported by a support mechanism and is rotated by operation of an actuator. The surface of the rotary roller 61 is partially exposed from the concave 13, and the surface of the rotary roller 62 is partially exposed from the concave 23.

The rotary roller 61 and the rotary roller 62 rotate in contact with the surface of the pipe P to run over the surface of the pipe P. The first grip device 10 and the second grip device 20 are coupled by the coupling mechanism 400 so as to be capable of relative movement. When the rotary roller 61 and the rotary roller 62 operate, the maintenance apparatus 100B moves in the vertical direction. For example, in the case of moving the maintenance apparatus 100B in the +Z direction, the action of bringing the grip portion 21 into the holding state, bringing the grip portion 11 in the releasing state, and rotating the rotary roller 61 such that the first grip device 10 moves in the +Z direction while the rotary roller 61 and the surface of the pipe P are in contact with each other, and the action of bringing the grip portion 11 into the holding state, bringing the grip portion 21 into the releasing state, and rotating the rotary roller 62 such that the second grip device 20 moves in the +Z direction while the rotary roller 62 and the surface of the pipe P are in contact with each other are repeated to move the maintenance apparatus 100B in the +Z direction. By performing reversely the foregoing actions, the maintenance apparatus 100B is moved in the -Z direction.

As described above, in this embodiment, when the rotary roller 61 and the rotary roller 62 operate, the maintenance apparatus 100B is allowed to move under the sea by frictional force generated between the rotary roller 61 and the rotary roller 62 and the surface of the pipe P.

In this embodiment, the rotary roller 61 may be provided but the rotary roller 62 may be omitted, or the rotary roller 62 may be provided but the rotary roller 61 may be omitted.

### <Third Embodiment>

A third embodiment will be described. In the following description, the components identical or equivalent to those in the foregoing embodiment are given the same reference signs as those in the foregoing embodiment, and descriptions thereof are simplified or omitted.

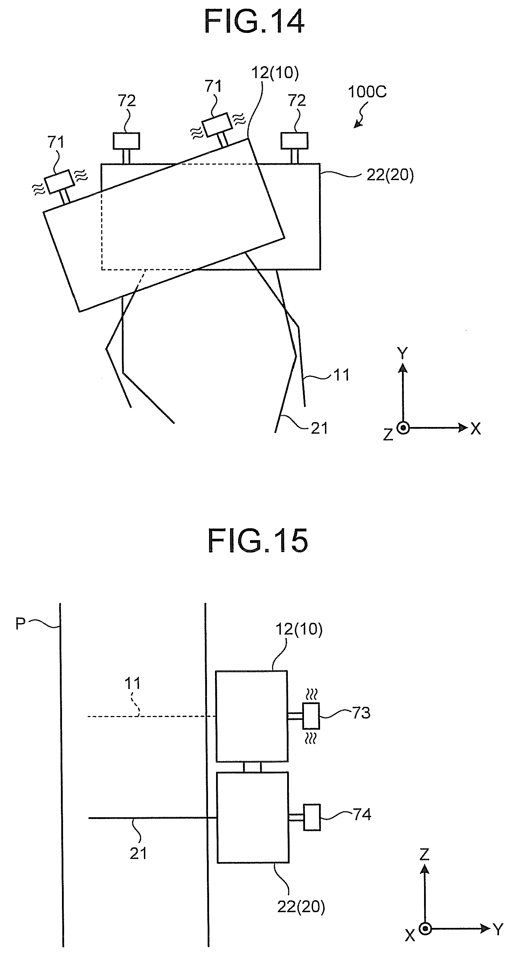

FIG. 14 is a plane view schematically illustrating an example of a maintenance apparatus 100C according to this embodiment. FIG. 15 is a side view schematically illustrating the maintenance apparatus 100C. In this embodiment, the maintenance apparatus 100C includes: a thruster 71 that is arranged at the first grip device 10 and is capable of moving the first grip device 10 in the turning direction; a thruster 73 that is arranged at the first grip device 10 and is capable of moving the first grip device 10 in the vertical direction; a thruster 72 that is arranged at the second grip device 20 and is capable of moving the second grip device 20 in the turning direction; and a thruster 74 that is arranged at the second grip device 20 and is capable of moving the second grip device 20 in the vertical direction. Each of the thrusters includes a screw. The first grip device 10 and the second grip device 20 are coupled by the coupling mechanism 400 so as to be capable of relative movement. When the thruster 71 operates, the support portion 12 moves in the turning direction. When the thruster 72 operates, the support portion 22 moves in the turning direction. When the thruster 73 operates, the support portion 12 moves in the vertical direction. When the thruster 74 operates, the support portion 22 moves in the vertical direction.

In this embodiment, the actions of bringing the grip portion 11 into the holding state and the releasing state, the actions of bringing the grip portion 21 into the releasing state and the holding state, and the action of operating the thruster 71 and the thruster 72 in synchronization with the actions of bringing the grip portion 11 and the grip portion 21 into the holding state and the releasing state to move the support portion 12 and the support portion 22 relatively in the turning direction are repeated, thereby to move the maintenance apparatus 100C in at least one of the +θZ direction and the -θZ direction. In addition, the actions of bringing the grip portion 11 into the holding state and the releasing state, the actions of bringing the grip portion 21 into the releasing state and the holding state, and the action of operating the thruster 73 and the thruster 74 in synchronization with the actions of bringing the grip portion 11 and the grip portion 21 into the holding state and the releasing state to move the support portion 12 and the support portion 22 relatively in the vertical direction are repeated, thereby to move the maintenance apparatus 100C in at least one of the +Z direction and the -Z direction. In this embodiment, when the thrusters (screws) operate, the maintenance apparatus 100C is moved by thrust force generated by the thrusters.

### <Fourth Embodiment>

A fourth embodiment will be described. In the following description, the components identical or equivalent to those in the foregoing embodiment are given the same reference signs as those in the foregoing embodiment, and descriptions thereof are simplified or omitted.

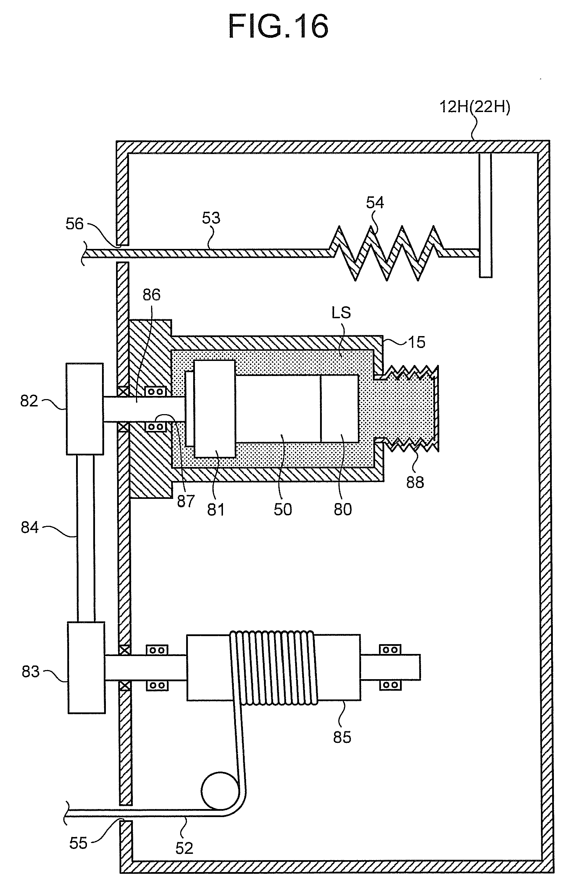

FIG. 16 is a cross-sectional view schematically illustrating an example of the housing 12H. As in the embodiment described above with reference to FIG. 10, the drive motor 50, the return spring 54, portion of the drive wire 52, and portion of the return wire 53 are arranged in the internal space of the housing 12H. At least portion of the drive wire 52 is arranged in the opening 55, and at least portion of the return wire 53 is arranged in the opening 56.

In this embodiment, a housing 15 is provided in the internal space of the housing 12H. The drive motor 50, an angle detector 80 detecting the amount of operation of the drive motor 50, and a decelerator 81 connected to the drive motor 50 are arranged in the internal space of the housing 15. The drive motor 50 is connected to a pulley 82 arranged in the external space of the housing 15 and the housing 12H via a shaft member 86. When the drive motor 50 operates, the pulley 82 rotates. With rotation of the pulley 82, a belt 84 connected to the pulley 82 operates and a pulley 83 connected to the belt 84 rotates. The pulley 83 is connected to a winding member 85 arranged in the internal space of the housing 12H, and the winding member 85 rotates with the rotation of the pulley 83. The winding member 85 is capable of winding up the drive wire 52. When the drive motor 50 operates, the drive wire 52 is wound up by the winding member 85.

In this embodiment, the internal space of the housing 15 is filled with oil (insulating oil) LS. The drive motor 50 is immersed in the insulating oil LS. Accordingly, even when seawater enters into the internal space of the housing 12H, the contact of the seawater with the drive motor 50 is suppressed. In addition, when the drive motor 50 is immersed in the insulating oil LS, the pressure acting on the drive motor 50 is unified. In this embodiment, a seal member 87 is arranged between the shaft member 86 and the housing 15. The seal member 87 suppresses leakage of the oil LS from the housing 15.

In this embodiment, the housing 15 is connected to a container (bellows container) 88 including a bellows member. The internal space of the housing 15 and the internal space of the bellows container 88 are connected together. As well as the internal space of the housing 15, the internal space of the bellows container 88 is filled with oil (insulating oil) LS. In the sea, the pressure (seawater pressure) increases at greater depths. When the depth becomes greater and the pressure increases, the bellows container 88 contracts. Accordingly, the pressure in the internal space of the housing 15 and the pressure in the bellows container 88 become equal to the pressure in the sea according to the depths. When the depth becomes lesser and the pressure decreases, the bellows container 88 extends. Accordingly, the pressure in the internal space of the housing 15 and the pressure in the internal space of the bellows container 88 become equal to the pressure in the sea according to the depths. In this manner, by providing the extendable and shrinkable bellows container 88, it is possible to equalize the pressure in the internal space of the housing 15 and the pressure in the internal space of the bellows container 88 to the seawater pressure according to the depths of the sea.

### Reference Signs List

10 First grip device
11 Grip part
12 Support part
12H Housing
20 Second grip device
21 Grip part
22 Support part
22H Housing
30 Maintenance device
40 Drive device
41 Grip drive device
42 Grip drive device
43 Movement device
59 Pressure adjustment device
60 Pressure sensor
61 and 62 Rotary roller
71, 72, 73, and 74 Thruster (screw)
100 Maintenance apparatus
P Pipe

## Claims

1. A maintenance apparatus for maintaining a pipe under the sea, comprising:
a first grip device that includes a plurality of joints and includes a first grip portion holding releasably a first portion of the pipe;
a second grip device that includes a plurality of joints, includes a second grip portion holding releasably a second portion of the pipe, and is configured to be movable relative to the first grip device;
a maintenance device that is mounted on at least one of the first grip device and the second grip device and is used for maintenance of the pipe; and
a drive device that drives the first grip device and the second grip device such that the first grip device and at least portion of the second grip device move relative to each other.

2. The maintenance apparatus according to claim 1, wherein
the drive device includes
a first grip drive device that is configured to move the first grip portion to hold the pipe by the first grip portion and release the pipe from the first grip portion,
a second grip drive device that is configured to move the second grip portion to hold the pipe by the second grip portion and release the pipe from the second grip portion, and
a movement device that is configured to move at least one of the first grip device and the second grip device such that the first grip device and the second grip device move relative to each other in at least one direction of a direction around an axis of the pipe, a direction orthogonal to the axis, and a radial direction relative to the axis.

3. The maintenance apparatus according to claim 2, wherein the movement device includes a screw arranged at one or both of the first grip device and the second grip device.

4. The maintenance apparatus according to claim 2 or 3, wherein the movement device includes a rotary roller that is provided at one or both of the first grip device and the second grip device so as to be capable of contacting the surface of the pipe and is capable of running over the surface of the pipe.

5. The maintenance apparatus according to any one of claims 1 to 4, wherein the drive device releases the pipe from the second grip portion while the first grip portion holds the pipe, and moves the second grip device relative to the first grip device.

6. The maintenance apparatus according to any one of claims 1 to 5, further comprising a cleaning device provided at at least one of the first grip device and the second grip device, wherein
the cleaning device performs cleaning of at least portion of the pipe.

7. The maintenance apparatus according to claim 6, wherein
the pipe is released from the second grip portion while the first grip portion holds the pipe, and
the cleaning device provided at the second grip device performs the cleaning while the second grip device moves relative to the first grip device.

8. The maintenance apparatus according to any one of claims 1 to 7, further comprising a detection device that is provided at at least one of the first grip device and the second grip device to detect the state of the pipe.

9. The maintenance apparatus according to claim 8, wherein
the pipe is released from the second grip portion while the first grip portion holds the pipe, and
the detection device provided at the second grip device detects the state of the pipe while the second grip device moves relative to the first grip device.

10. The maintenance apparatus according to any one of claims 1 to 9, further comprising:
a housing that has an internal space where at least portion of the drive device is arranged; and
a pressure adjustment device that makes the pressure in the internal space of the housing higher than the pressure in the external space of the housing.

11. The maintenance apparatus according to claim 10, further comprising a pressure sensor that detects the pressure in the internal space, wherein
the pressure adjustment device adjusts the pressure in the internal space based on the result of detection by the pressure sensor.

12. The maintenance apparatus according to claim 10 or 11, wherein the first grip portion and the second grip portion is arrange in the external space of the housing, and
the maintenance apparatus includes:
a driving force transfer member that is at least partially arranged in an opening provided in the housing to transfer driving force of the drive device to one or both of the first grip portion and the second grip portion; and
a seal member that seals the opening.

13. The maintenance apparatus according to any one of claims 1 to 9, further comprising a housing that has an internal space where at least portion of the drive device is arranged, wherein
the internal space is filled with oil.
